Europäisches Patentamt

European Patent Office

Office européen des brevets

(11) Publication number: **0 134 816**
**B1**

(12) **EUROPEAN PATENT SPECIFICATION**

(45) Date of publication of patent specification: **10.05.89**

(51) Int. Cl.⁴: **F 17 C 7/00**

(21) Application number: **84900929.5**

(22) Date of filing: **27.01.84**

(86) International application number:
**PCT/US84/00134**

(87) International publication number:
**WO 84/02968 02.08.84 Gazette 84/18**

(54) **TIRE VALVE CONNECTOR.**

(30) Priority: **27.01.83 US 460880**

(43) Date of publication of application:
**27.03.85 Bulletin 85/13**

(45) Publication of the grant of the patent:
**10.05.89 Bulletin 89/19**

(84) Designated Contracting States:
**DE FR GB NL**

(56) References cited:
**US-A- 688 698**
**US-A-1 130 475**
**US-A-1 500 531**
**US-A-1 816 804**
**US-A-3 329 180**
**US-A-3 568 736**

**No relevant documents have been disclosed**

(73) Proprietor: **Precision Valve Corporation**
**P.O. Box 309 700 Nepperhan Avenue**
**Yonkers New York 10702 (US)**

(72) Inventor: **BAYER, Christian**
**19 Faraway Road**
**Armonk, NY 10504 (US)**

(74) Representative: **Knoblauch, Ulrich, Dr.-Ing.**
**Kühhornshofweg 10**
**D-6000 Frankfurt am Main 1 (DE)**

Courier Press, Leamington Spa, England.

## Description

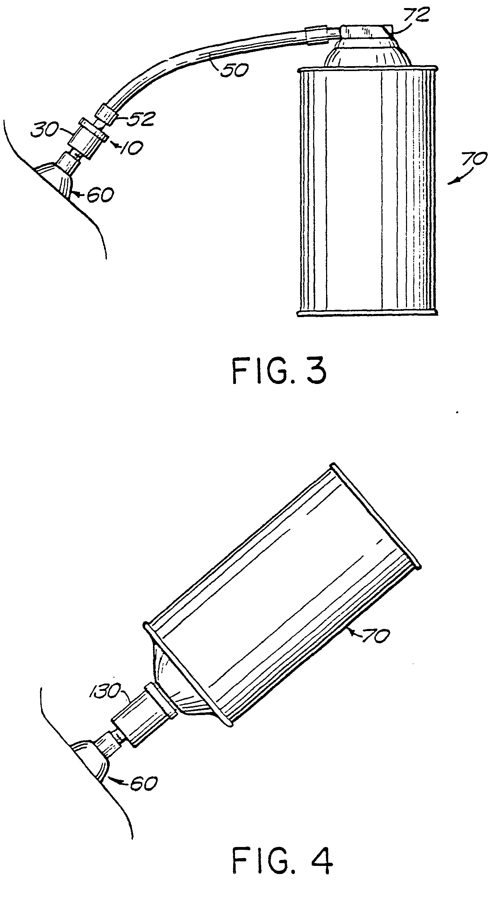

The invention relates to a connector for attachment of a portable dispenser of pressurized gas, having a manually actuable gas discharge outlet to a tire valve having an externally threaded stationary outer portion and a movable valve opening member extending within the threaded outer portion, said connector comprising a body member having a flow passage, an internally lugged skirt movable onto the threaded outer surface of stationary outer portion, and a central projection protruding within said skirt for contacting and depressing the valve opening member, a sealing member disposed at the bottom of the recess formed between the skirt and the central projection, as is known from US—A—3568 736 (Fig. 3).

Portable containers of pressurized gas for emergency tire re-inflation have become common, Because of its cost and the amount of space it occupies, the traditional spare tire mounted on a wheel and stored inflated is being replaced by a much less bulky mounted emergency tire and container of compressed gas. Most commonly, the container takes the form of conventional aerosol pressurized dispenser-can filled with a liquefied gas such as a fluorocarbon or butane under relatively low pressure.

The connection or adaptor between the tire valve and the pressurized gas container should be capable of swift attachment and detachment to avoid loss of gas, should be free of leakage, should be simple enough in manner of use to be self-evident to the user who may be inexperienced, or working under stress, or working in the dark, and should be adequately secure once connected to resist inadvertent disconnection during inflation. While aerosol containers with tire valve connection adaptors long have been sold, prior adaptors fail to some degree to meet one or more of the foregoing criteria.

In the prior connector or adaptor known from US—A—3568 736 the central projection is loosely received within the flow passage of the body member remote from the stem of a valve member normally urged towards seated position by pressures existing within the container or a spring for positively maintaining and returning the valve member to seated condition. Accordingly, the prior central projection acts as an actuator not only with respect to the tire valve, but also with respect to the valve exposed to the interior of the container. Due to this construction, the position of the actuator (central projection) depends on the pressure existing within the container or the force of the spring urging the valve member of the container towards its seated position. If this force is smaller than the counter force acting on the movable valve opening member of the tire valve to maintain the valve opening member in its closed position, it is not possible for the central projection to open the tire valve by connecting the connector or adaptor to the tire valve. Accordingly, provision has to be made to ensure that the force urging the valve member of the container towards seated position is always greater than the force urging the movable valve opening member of the tire valve towards its closed position. Since the closing force executed on the valve opening member of the tire valve is generally not known, because it may be produced by the internal pressure of the tire and/or an unknown spring, it is a very difficult problem to ensure that the valve opening member of the tire valve and at the same time the valve member of the container valve is opened, when the connector is connected to the tire valve.

Furthermore, the internal lugs of the skirt of this prior connector are provided by internal threads so that the prior connector has to be screwed onto the externally threaded stationary outer portion of the tire valve. This has the disadvantage that the connector is not simple enough in the manner of use. Moreover, since it takes a relatively long time to screw the skirt onto the externally threaded stationary outer portion of the tire valve or to unscrew the skirt, it takes a relatively long time for the movable central projection to move the valve opening member into the open position or to release it to be returned into the closed position, so that it is not possible to avoid a loss of a high amount of gas.

Accordingly, the problem to be solved by the invention is to provide a connector of the type stated in the preamble of claim 1, wherein not only the manner of use is simplified, but also loss of gas is avoided. According to the present invention, this problem is solved by providing that the skirt is segmented by axially extending slots; that an axially reciprocatable sleeve is adapted to be moved over the skirt for bending the segments radially inwardly against the treaded outer surface for engagement therewith; and that the central projection is rigidly secured to the body member.

This construction allows a rapid swift attachment and detachment of the portable dispenser, without the need of turning the connector and without substantial leakage. The connector is simple enough in manner of use to be self-evident to the user who may be inexperienced, or working under stress, or working in the dark, and should be adequately secure, once connected, to resist inadvertent disconnecting during inflation.

Whereas the connector known from US—A—668 698 also allows rapid attachment to a tire valve having an externally threaded stationary outer portion, it does not allow opening a tire valve having a movable valve opening member extending within a threaded outer portion, because the valve-stem does not extend within an externally threaded stationary outer portion and, moreover, the valve-stem probably is not movable. Also in the prior art known from US—A 3329 180 the central projection is axially movable within the central passage of the body member.

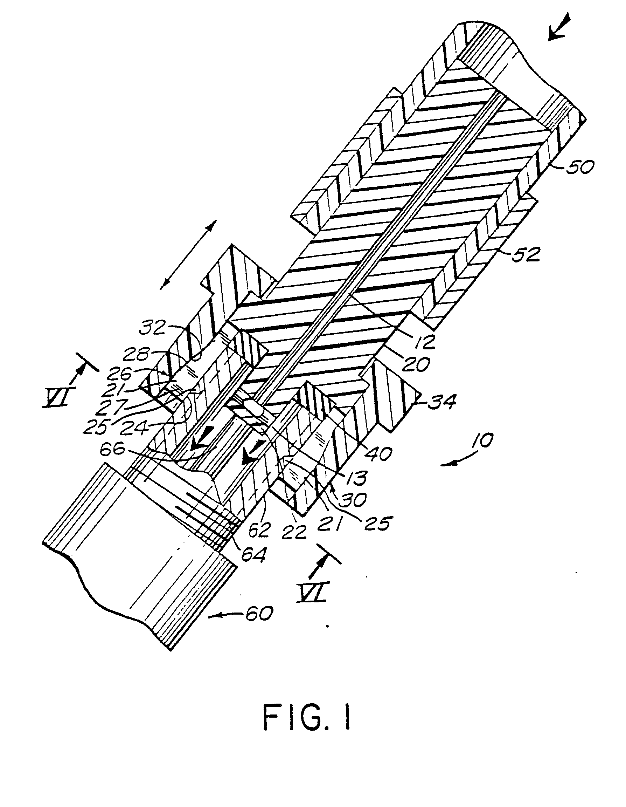

The invention is now described, by way of example, with reference to the drawings, wherein Fig. 1 is a view, partly in section of one embodiment of the connector device of the present invention;

Fig. 2 is a view, partly in section of another embodiment;

Fig. 3 is a view of the connector of Fig. 1 at the end of a flexible tube attached to a container;

Fig. 4 is a view of the connector of Fig. 2 mounted directly on a container;

Fig. 5 is a perspective, exploded view of portions of the device of Fig. 1; and

Fig. 6 is a view taken along the line VI—VI of Fig. 1.

## Detailed Description

The device of the present invention is a connector or adaptor, preferably inexpensively molded of a suitable plastic such ás nylon or polypropylene, for connecting a tire valve to a pressurized aerosol dispenser containing a charge of gas for inflation of the tire or other inflatable object.

Figure 1 shows the adaptor device generally designated as 10 in an embodiment attached to a flexible tube 50 which leads to a pressurized aerosol dispenser. The device 10 is shown connected to a tire valve 60 having a pipe 62 with external threads 64 at its outer end. A valve stem or pin 66 of the tire valve 60 is depressed by the device 10 to open the valve for inflation. Gas such as a fluorocarbon or butane flows through the tube 50 and a passage 12 in the device 10 and then through the tire valve 60 as is indicated by flow arrows.

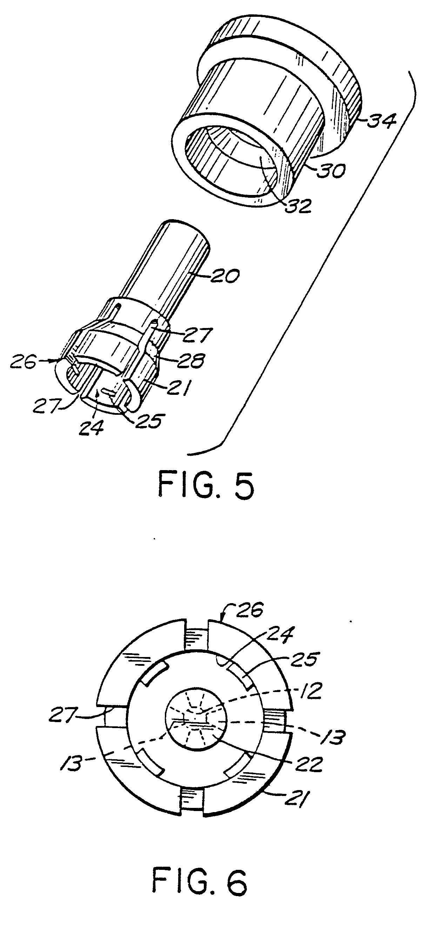

The adaptor device comprises a tubular body 20 and an axially slideable sleeve 30. The body 20 includes a flow passage 12 in communication with radial ports 13 in a peg 22 which contacts and depresses the tire valve stem pin 66. The peg 22 is central of a cavity 24 defined by a skirt 26 having lugs 25 for mating with the threads 64 of the tire valve. Figures 1, 5 and 6 show that the skirt 26 is segmented by a plurality of radial slots 27 which extend axially to divide the skirt into a plurality of segments 21 each integral with the body. It is these segments which are provided with lugs 25. The outside of the skirt 26 includes a sloping conical surface 28. The interior of the sleeve 30 conforms to the exterior of the skirt 26 and includes a similar conical surface 32.

A flat annular gasket 40 serves to seal the connector device 10 to the tire valve pipe 62 when connected together. A metal ferrule 52 secures a flexible tube 50 to the body 20 of the device.

In operation, the sleeve 30 is withdrawn by moving it upward to the right in Figure 1, thereby allowing the skirt segments 21 freedom to diverge radially outwardly. The device is slipped into place on the tire valve, the freedom of the skirt segments allowing the internal lugs 25 to slip past the tire valve threads 64 with ease. Sleeve 30 then is moved toward the tire valve 60 (down to the right in Figure 1). Conical ramp surface 32 of the sleeve wedges against conical ramp surfaces 28 of the skirt segments 21 to urge the skirt segments inwardly to bring the skirt lugs 25 into engagement with the valve threads 64 to thereby lock the adaptor device 10 securely on the valve 60. The peg 22 drives the valve stem inwardly to open the valve and gasket 40 seals the connector device to the valve. Pressing the actuator 72 of the pressurized aerosol container (see Figure 3) opens the container valve to allow the pressurized gas within the container to flow through the tube 50 and through the passages 12, 13 of the adaptor into the tire valve 60.

Axial movement of the sleeve 30 is facilitated by a collar 34 for grasp by the fingers. A lever control easily can be added to the simple version of the device chosen for illustration. When inflation is complete, the device 10 quickly can be disconnected from the valve 60 by withdrawing sleeve 30 to restore freedom of movement to the skirt segments. The ability to remove the connector device quickly and easily insures against loss of inflation pressure through unwanted leakage. This is particularly important when the device is used with low volume, high pressure bicycle tires. Of course, the sleeve can be left in the advanced position and the device screwed on and unscrewed off the valve 60 if circumstances warrant.

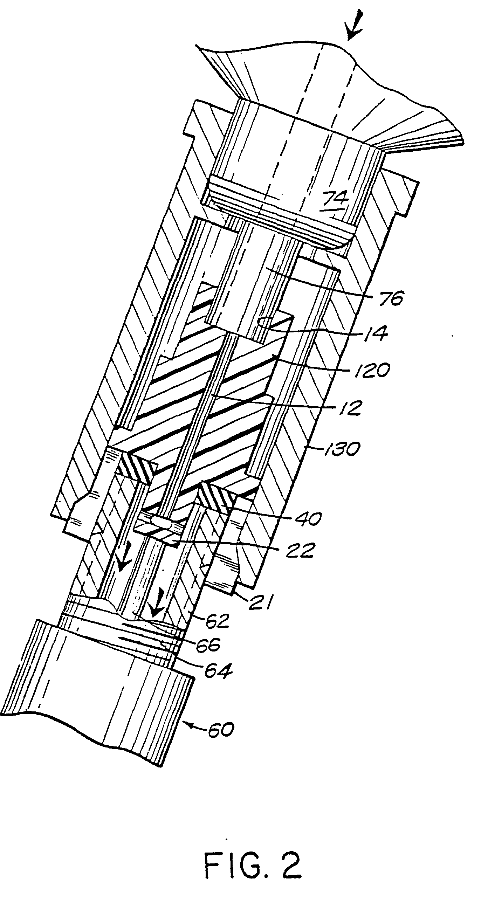

Figures 2 and 4 refer to another embodiment. This embodiment serves as a direct connection between the tire valve 60 and the pressurized aerosol dispenser container 70. In this embodiment the sleeve 130 extends to embrace the pedestal 74 of the valve mounting cup of the aerosol container 70. The valve stem 76 of the container valve is received in a socket 14 formed in the distal end of the body 120 which otherwise is identical with body 20 of the embodiment of Figure 1. The valve stem receiving socket communicates with gas flow passage 12 as before described. In other respects this embodiment is the same as that described in connection with Figure 1.

In operation, the spring of the container valve maintains the container valve stem in the outward extended position of a normally closed aerosol valve. The body 120 thereby normally is extended from the sleeve 130 far enough to allow the skirt segments the freedom to diverge. The user slips the skirt over the tire valve pipe 62 and presses against the bottom of the aerosol container thereby driving the sleeve 130 over the skirt segments 21 to secure the connector to the tire valve threads 64 and to press tire valve stem 66 with the peg 22 to open the tire valve 60 while at the same time driving the container valve stem 76 inwardly to open the container valve. Gas flow will continue until the user ceases pressing the container. Disconnection is accomplished by pulling the container and connector assembly away from the tire valve 60.

## Claims

1. Connector for attachment of a portable dispenser (7C) of pressurized gas having a manually actuable gas discharge outlet to a tire valve (60) having an externally threaded stationary outer portion (62) and a movable valve opening member (66) extending within the threaded outer portion (62), said connector comprising a body member (20; 120) having a flow passage (12), an internally lugged skirt (26) movable onto the threaded outer surface of the stationary outer portion (62), and a central projection (22) protruding within said skirt (26) for contacting and depressing the valve opening member (66), a sealing member (40) disposed at the bottom of the recess formed be tween the skirt (26) and the central projection (22), characterized in that the skirt (26) is segmented by axially extending slots; that an axially reciprocatable sleeve (30) is adapted to be moved over the skirt (26) for bending the segments (21) radially inwardly against the threaded outer surface for engagement therewith; and that the central projection (22) is rigidly secured to the body member (20; 120).

2. Connector of claim 1, characterized in that the inner surface (32) of the sleeve (30) and the outer surface (28) of the skirt (26) are outwardly sloped toward the base of the connector (10).

## Patentansprüche

1. Anschluß zum Ankuppeln einer tragbaren Druckgasausgabevorrichtung (70), die einen manuell betätigbaren Gasauslaß aufweist, an ein Reifenventil (60) mit einem ein Außengewinde aufweisenden feststehenden Außenteil (62) und einem bewegbaren Ventilöffnungsglied (66), das sich in dem mit Gewinde versehenen Außenteil (62) erstreckt, wobei der Anschluß aufweist: Einen Körperteil (20; 120) mit einem Durchflußkanal (12), einem nach innen vorspringenden Schurz (26), der auf die mit Gewinde versehene Außenfläche des feststehenden Außenteils (62) bewegbar ist, und einem mittleren Vorsprung (22), der in den Schurz (26) ragt, um mit dem Ventilöffnungsglied (66) zur Anlage zu kommen und es einzudrücken, und ein Dichtungsglied (40), das am Boden der zwischen dem Schurz (26) und dem mittleren Vorsprung (22) gebildeten Vertiefung angeordnet ist, dadurch gekennzeichnet, daß der Schurz (26) durch sich axial erstreckende Schlitze in Segmente unterteilt ist; daß eine axial verschiebbare Hülse (30) über den Schurz (26) schiebbar ist, um die Segmente (21) radial nach innen gegen die mit Gewinde versehene Außenfläche zu biegen und mit dieser zur Anlage zu bringen, und daß der mittlere Vorsprung (22) starr am Körperteil (20; 120) befestigt ist.

2. Anschluß nach Anspruch 1, dadurch gekennzeichnet, daß die innere Oberfläche (32) der Hülse (30) und die äußere Oberfläche (28) des Schurzes (26) nach außen in Richtung auf die Basis des Anschlusses (10) abgeschrägt sind.

## Revendications

1. Connecteur pour fixer un distributeur portable (70) de gaz sous pression, présentant une sortie de décharge de gaz manoeuvrable manuellement, sur une valve (60) de pneumatique présentant une portion extérieure fixe (62) filetée extérieurement et un organe mobile (66) d'ouverture de la valve s'étendant à l'intérieur de la portion extérieure filetée (62), ledit connecteur comportant un organe formant corps (20; 120) présentant un passage d'écoulement (12), une jupe (26) munie intérieurement de pattes et pouvant se déplacer sur la surface extérieure filetée de la portion extérieure fixe (62), ainsi qu'un prolongement central (22) venant en saillie à l'intérieur de ladite jupe (26) pour venir en contact avec l'organe (66) d'ouverture de la valve et l'enfoncer, un organe d'étanchéité (40) étant disposé au fond de la niche formée entre la jupe (26) et le prolongement central (22), caractérisé en ce que la jupe (26) est segmentée par des fentes s'étendant axialement; en ce qu'un manchon (30), qui peut prendre un mouvement axial de va et vient, est adapté à venir par dessus la jupe (26) pour faire fléchir les segments (21) radialement vers l'intérieur contre la surface extérieure filetée pour venir en prise avec elle; et en ce que le prolongement central (22) est fixé rigidement à l'organe formant corps (20; 120).

2. Connecteur selon la revendication 1, caractérisé en ce que la surface interieure (32) du manchon (30) et la surface extérieure (28) de la jupe (26) sont en pente vers l'extérieur en direction de la base du connecteur (10).

FIG. I

FIG. 2

FIG. 3

FIG. 4

FIG. 5

FIG. 6